# EUROPEAN PATENT SPECIFICATION

(11) **EP 4 006 259 B1**
(45) Date of publication and mention of the grant of the patent: **29.04.2026**
(21) Application number: 20210445.1
(22) Date of filing: 27.11.2020
(51) Int. Cl.: E04F 13/08, F16B 5/06

(54) **SYSTEM FOR FIXATION OF ELONGATE CLADDING PANELS**
SYSTEM ZUR BEFESTIGUNG VON LANGGESTRECKTEN VERKLEIDUNGSPANEELEN
SYSTÈME DE FIXATION POUR PANNEAUX DE REVÊTEMENT ALLONGÉS

(43) Date of publication of application: 01.06.2022
(73) Proprietor: Gustafs Scandinavia AB, 783 50 Gustafs (SE)
(72) Inventor: KIHL, Pär-Erik, 784 33 Borlänge (SE); KROUWEL, Ruben, 784 55 Borlänge (SE)
(74) Representative: Kransell & Wennborg KB

(56) References cited:
- DE-U1- 9 015 211
- FR-A- 1 327 617
- US-A- 1 948 462
- US-B2- 8 931 231

## Description

### TECHNICAL FIELD

The present disclosure relates generally to the field of claddings for ceilings, walls and the like and in particular to a system for fixation of elongate cladding panels to a ceiling, a wall and the like.

### BACKGROUND

At the construction of buildings, claddings of the walls and ceilings may be used for decorative and other purposes. Especially when applied to interior walls and ceilings, the claddings may also essentially improve the acoustic properties of the room where they are applied.

In recent years, a particular type of claddings comprising a plurality of elongate cladding panels arranged side by side with an interspace has become increasingly popular. Such elongate claddings may give a particular and appreciated architectural expression. In addition, their sound damping properties give excellent acoustics and the interspaced arrangement of the panels may reduce the amount of cladding material needed.

There exist several methods and systems for attaching such elongate cladding panels to the walls and ceilings to be cladded. Naturally, the panels may be directly fixed to the cladded surface by means of screws, nails, adhesive or the like. However, such fixation is labour intensive time consuming. In addition, direct fixation does not easily allow the arrangement of additional sound damping material, electric cabling or ventilation ducts to be interposed between the underlying surface and the cladding panels, which often may be desired or required.

For these and other purposes, different systems for fixation of prefabricated elongate cladding panels to walls and ceilings have been developed. Typically, the systems may comprise a number of elongate base members which are arranged to be fixed to or suspended from the wall or ceiling such that they extend mutually interspaced, side-by-side in a first direction. The systems further comprise a plurality of elongate cladding panels and fixation means for attaching the panels to the base members such that the panels extend interspaced, side-by-side, perpendicular to the base members. By arranging the base member with a distance to the underlying surface, the systems readily allow the arrangement of sound absorbing material, electrical cabling, ventilation ducts and the like to be concealedly arranged behind the cladding panels.

AU 2018282353 A1 discloses a known system for fixing elongate cladding battens. The system comprises a base trac, an elongate batten and an intermediate piece. The intermediate piece has a first engagement profile which engages a corresponding engagement profile of the base trac and a second engagement profile which engages a corresponding engagement profile on the batten. A deformable retainer is provided between the intermediate piece and the batten for retaining the batten in place.

FR 1327617A discloses system for fixing elongate panels and the like. The system comprises carrier bars exhibiting rectangular slots into which resilient fixation elements attached to a panel may engaged by snap-fitting.

### SUMMARY

An object of the present disclosure is to provide an enhanced system for fixation of elongate cladding panels to a ceiling, a wall or the like.

Another object is to provide such a system which allows easy mounting of the cladding panels.

A further object is to provide such a system which facilitates the removal and re-mounting of already fixed panels.

Yet a further object is to provide such a system which allows accurate positioning of the elongate panels, both in the longitudinal and the transverse directions.

Still another object is to provide such a system which facilitates joining two panels one after the other in the longitudinal direction and which enhances such longitudinal joints.

Still a further object is to provide such a system which comprises only a limited number of standardized components and which may be produced at a comparatively low cost.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

According to a first aspect, the present disclosure provides a system for fixation of elongate cladding panels to a ceiling, a wall or the like. The system comprises; at least one elongate base profile arranged to extend in a first direction and being provided with a plurality of first fixation holes arranged one after the other in the first direction, at least one elongate cladding panel arranged to extend in a second direction which is non-parallel, preferably essentially perpendicular to the first direction, a number of fixation elements, each of which is arranged to be attached to a cladding panel, and at least one fixation clip which is fixable to or made integral with one of the fixation elements and arranged to be received in a first and a second fixation hole for fixation of the cladding panel to the base profile. The fixation clip exhibits a first engagement portion arranged to be received in the first fixation hole and wherein the extension in the second direction of the first fixation hole is greater than two times the extension in the second direction of the first engagement portion.

The system thus comprises only a comparatively low number of different constituent components an allows easy mounting of the cladding simply by first fixing the base profiles to the surface to be cladded and attaching a number of fixation elements to each panel. At embodiments where the fixation clip is made separate from the fixation element, the fixation clip is fixed to a fixation element before or after attaching the fixation elements to the cladding panel. Thereafter, the panels may readily be fixed to the base profiles simply by snap-fitting each clip into a corresponding first fixation hole in the base profiles.

The arrangement of the clip receiving first fixation holes in the base profiles ascertains that the panels automatically are correctly positioned in the transvers, first direction such that all measuring and use of templets for achieving the correct transverse interspace between the panels may be omitted.

Additionally, the arrangement of the first fixation hole's extension in the panel's longitudinal direction to be greater than the corresponding extension of the clip, greatly facilitates the mounting process. Firstly, by this means the accuracy by which the fixation elements should be longitudinally positioned and attached to the panels may be reduced. Secondly, the longitudinal play greatly facilitates sufficient alignment and the insertion of the clip into the first fixation hole. The longitudinal play further provides an important advantage in that the panels may be longitudinally adjusted also after having been mounted. By this means, any unwanted play between two panels mounted one after the other in the longitudinal direction may readily be eliminated simply by longitudinal readjustment of either or both panels after all panels have been snap-fitted onto the base profiles.

In addition, the second direction extension of the first fixation hole is be greater than two times the second direction extension of the first engagement portion. This allows on the one hand for a substantial longitudinal readjustment of a single panel. On the other hand, this arrangement also allows for that two panels, arranged longitudinally one after the other and supported at their adjacent ends by a respective clip, may be fixed to one and the same base profile. By this means, the adjacent ends of longitudinally neighbouring panels may be fully aligned, supported arranged with no or any desired distance by the use of a single base profile supporting the ends of both panels.

The fixation clip may be resilient and the first engagement portion may be arranged to be releasably received in the first engagement hole by snap-fitting. This greatly facilitates mounting, de-mounting and re-mounting of the panels.

Each fixation element may be provided with a second fixation hole and the fixation clip may then be arranged to be received in the second fixation hole for fixation of the fixation clip (40) to the fixation element.

A system according to claim 3, wherein the fixation clip comprises a second engagement portion which is arranged to be received in the second engagement hole by snap-fitting. This further facilitates the overall mounting process and reduces the number of tools needed during the process.

The fixation clip may comprise a resilient profile element having a constant cross section. This affords for i.a. that the clips may readily be produced by a cost-effective extrusion and cutting process.

The cross section of the fixation clip may comprise two legs which are joined at an apex. Arranging an apex at the clip greatly facilitates the insertion of the clip onto the first and second fixation holes.

The two legs may form a first widened portion and a waist portion of the cross section, which waist portion is arranged distal of the first widened portion with respect to the apex and wherein the first engagement portion is arranged at the waist portion. This provides a comparatively a clip design which is simple to manufacture and easy to use in that snap-fit insertion of the clip is facilitated by first aligning the apex with the respective first fixation holes.

The second engagement portion is arranged at the waist portion of the cross section of the clip, distal of the first engagement portion with respect to the apex. By this means the engagement portions for both the base profile and the fixation element may readily be formed during manufacturing of the clip.

The cross section may comprise a second widened portion which is arranged distal to the second engagement portion with respect to the apex. The second widened portion ascertains a secure fixation of the panels to the base profile.

The resilient profile element forming the clip may be formed of or comprises a spring steel material. By this means the clip may be given a simple design while still assuring easy and reliable snap-fitting fixation.

The number of fixation elements may comprise at least one end fixation profile extending in the second direction when mounted and exhibiting a second fixation hole arranged in proximity to a longitudinal end of the end fixation profile. This allows for that the ends of the panels are securely fixed to the base profile such that any misalignment of the panel ends is avoided. In particular this allows for that the adjacent ends of two longitudinally neighbouring panels may be fixed to and supported by a single base profile.

The number of fixation elements may further comprise at least one centre fixation profile extending in the second direction when mounted and exhibiting a second fixation hole arranged at longitudinal mid portion of the centre fixation profile. This enhances load distribution when the load of the panels is transferred via the clip to the base profile.

The cladding panel may exhibit at least one longitudinal groove arranged to fixedly receive a protruding flange of a fixation element. By this means the fixation elements may readily and securely be fixed to the panels.

The fixation element may comprise a fixation profile, the cross section of which exhibits a central portion provided with a second fixation hole and a protruding flange at each lateral side of the central portion and wherein the cladding panel exhibits a cross section comprising a longitudinally extending recess arranged to receive the central portion and two longitudinal groves each of which is arranged to receive one of the flanges. By designing the fixation element as a profile element with a constant cross section, the fixation elements may readily be manufactured by a cost-effective extrusion and cutting process, e.g. of aluminium. The reception of such a profile element in a corresponding recess and groove configuration of the panels allows for easy positioning and attachment of the fixation element to the panel.

The elongate cladding panel may comprise fibre reinforced gypsum. Such materials may readily be formed to any desirable shape of the panel. Fibre reinforced gypsum also provides excellent fire protection properties and may readily be provided with natural or synthetic coatings to achieve any desired visual appearance of the cladding.

According to one embodiment the base profile comprises at least one pair of first fixation holes aligned one after the other in the second direction (Y) and wherein the length of each first fixation hole in the second direction (Y) is greater than the length in the second direction of the fixation clip's mounting portion. This also allows for that adjacent ends of two longitudinally aligned cladding profiles are fixed to and supported by the same base profile while allowing longitudinal adjustment of the cladding profile after fixation.

Further objects and advantages of the system will appear from the below detailed description of embodiments and from the appended claims.

### BRIEF DESCRIPTION OF THE DRAWINGS

Aspects and embodiments are now described, by way of example, with reference to the accompanying drawings, in which:
Fig. 1 is a perspective view of a simplified system according to one embodiment.

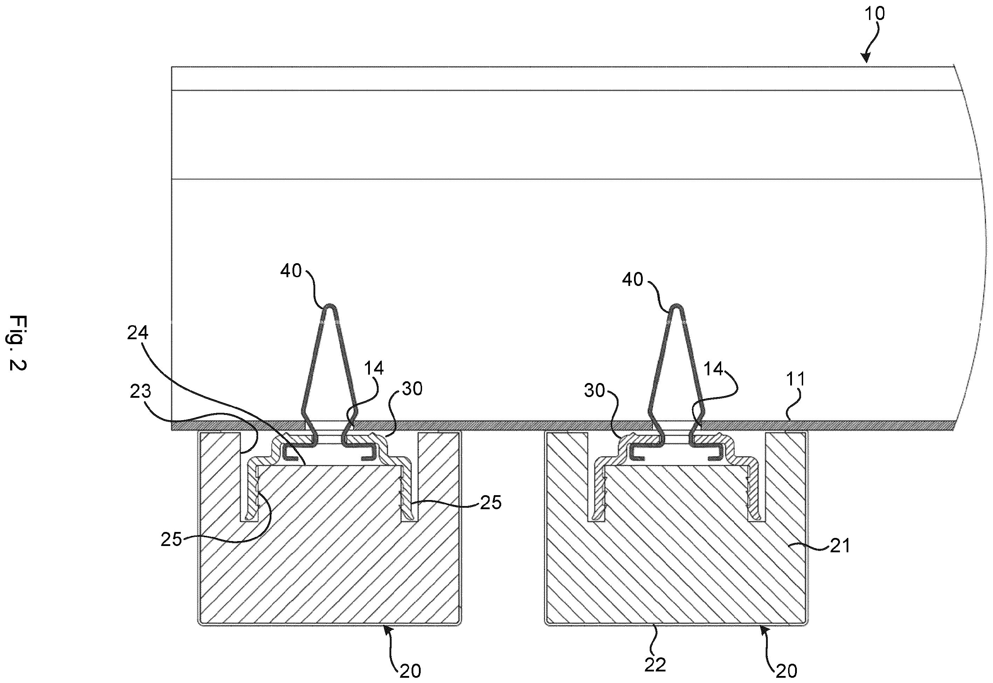

Fig. 2 is a section through a system comprising one base profile and two cladding panels.
Fig. 3a and b are perspective views illustrating respective alternative designs of a fixation element with a fixation clip inserted.
Fig. 4a is a cross section through a fixation clip comprised in the system and fig. 4b is a perspective view of said fixation clip.
Fig. 5 is a sectional view of a system illustrating one base profile, two cladding panels and two sound insulating elements.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

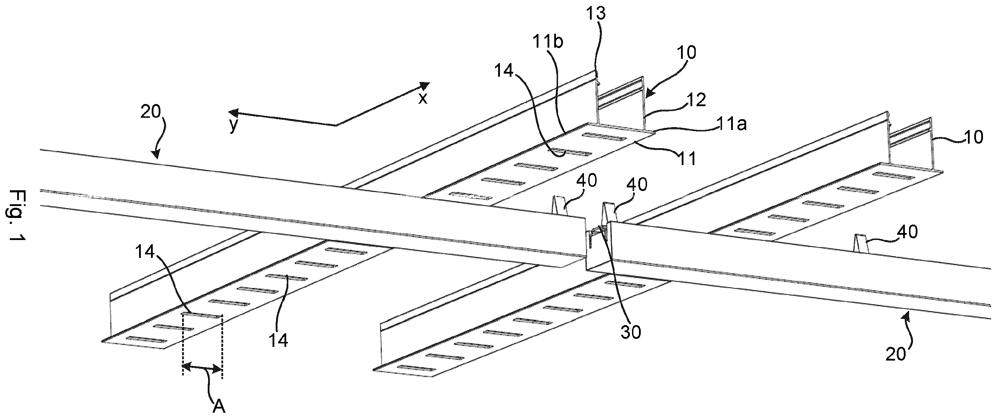

The system illustrated in fig. 1 is simplified for increased clarity. The system comprises two elongate base profiles 10, two elongate cladding panels 20, three fixation elements 30 (only one shown in fig. 1) and three fixation clips 40.

The base profiles 10 extend mutually in parallel in a first longitudinal direction X. The base profiles 10 are fixed to and in parallel with a ceiling (not shown) such that they are arranged in a common horizontal plane. The base profiles may be directly fixed to the ceiling by means of screws, nails, fixation brackets (not shown) or the like. Alternatively, they may be suspended at a distance from the ceiling by means of suspension rods, wires, brackets or the like. The base profiles 10 are further mutually distanced by, in the shown example, approx. 600 mm. Naturally any suitable distancing may be applied. In the shown example, each base profile 10 is formed of a profile element having a constant cross section along its length. The cross section is generally U-shaped and exhibits a base plate 11 and two first flanges 12, 13 extending perpendicularly from a respective side region of the base plate 11. The base plate 11 comprises two side flanges 11a, 11b which extend laterally beyond s respective first flange 12, 13. In use the side flanges 11a, 11b may be used for supporting sound insulating elements (not shown) or the like which are arranged between neighbouring base profiles.

The base plate 11 further exhibits a plurality of first fixation holes 14 arranged one after the other in the first direction A, i.e. in the longitudinal direction of the base profile 11. Each fixation hole 14 is through penetrating the base plate 11 and elongated in a second direction Y, which is perpendicular to the first direction X. The length in the second direction Y of the first fixation holes 14 is indicated as L in the figures.

In the shown example, the elongate cladding panels 20 have a generally rectangular cross section and comprise a core 21 of fibre reinforced gypsum. The outer sides of the core are covered by a decorative veneer 22. In other not shown examples the cladding panels may be formed of other coated or not coated materials such as wood, polymer materials, aluminium or the like. When the cladding panels are coated, the coatings may, instead of veneers, comprise various other materials such as paints, lacquers or polymer coatings and the like.

A recess 23 is formed in the outer side of the cladding panel 20, which side faces the base profile 10, when mounted. The recess 23 comprises a central indentation 24 which has a rectangular cross section and which extends longitudinally in the second direction over the entire length of the cladding panel. A groove 25 which extends further into the core 21 and longitudinally over the entire length is arranged from the bottom of the indentation 24, at each lateral side of the indentation 24.

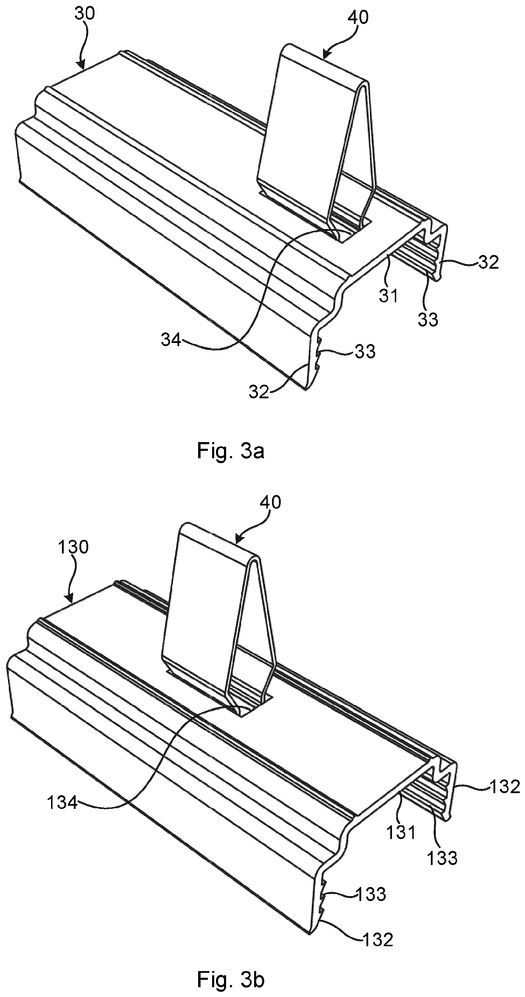

The system further comprises two different types of fixation elements 30, 130 best seen in figs 3a and 3b. The types of fixation elements comprise an end fixation element 30 and a centre fixation element 130. Both types of fixation elements 30, 130 are elongate and formed of a respective fixation profile element which in the shown example are formed of extruded profile elements of aluminium. The fixation elements 30, 130 have mutually identical cross section which are constant over the entire length of the respective fixation element. The cross section is generally U-shaped having a central U-shaped base portion 31, 131 and two flanges 32, 132 which protrude perpendicularly from each lateral side of the base portion 31, 131. The flanges 32, 132 are provided with a number of teeth 33, 133 pointing inwardly from the respective flange 33, 133.

Both types of fixation elements 30, 130 have a second fixation hole 34, 134 arranged in the base portion 31, 131. The two types differ in that the second fixation hole 34 is located in proximity to a longitudinal end of the fixation element 30 whereas the second fixation hole 134 is located at a mid-portion of the fixation element 130. In both cases the second fixation hole 34, 134 is through penetrating the base portion 31, 131 and has a rectangular shape where the longer side of the second fixation hole 34, 134 extends in the longitudinal direction of the fixation element 30, 130.

The fixation elements 301 130 may be attached to a cladding panel 20 by inserting the flanges 33, 133 into the grooves 25 and pressing the fixation element 30, 130 into the cladding panel 20 such that the fixation element 30, 130 is received in the recess 23 of the cladding panel 20. When so attached the teeth 33, 133 of the fixation element 30, 130 engage the core 21 of the cladding element such that the fixation element 30, 130 is prevented from being detached from the cladding panel 20. In practice, the fixation elements 30, 130 are distributed along and attached to the cladding panels 20 such that the second fixation holes 34 are separated from each other the same distances as the first fixation holes 14 are separated in the second direction when the base profiles 10 have been mounted. At each cladding panel 20, one end fixation element 30 is attached at each longitudinal end of the cladding panel, such that the second fixation hole 34, 134 is positioned in proximity to the respective end of the cladding panel 20. A number of centre fixation elements 130 are distributed along the cladding panel 20 such that their second fixation holes 134 are aligned with the corresponding first fixation holes 14 when mounted.

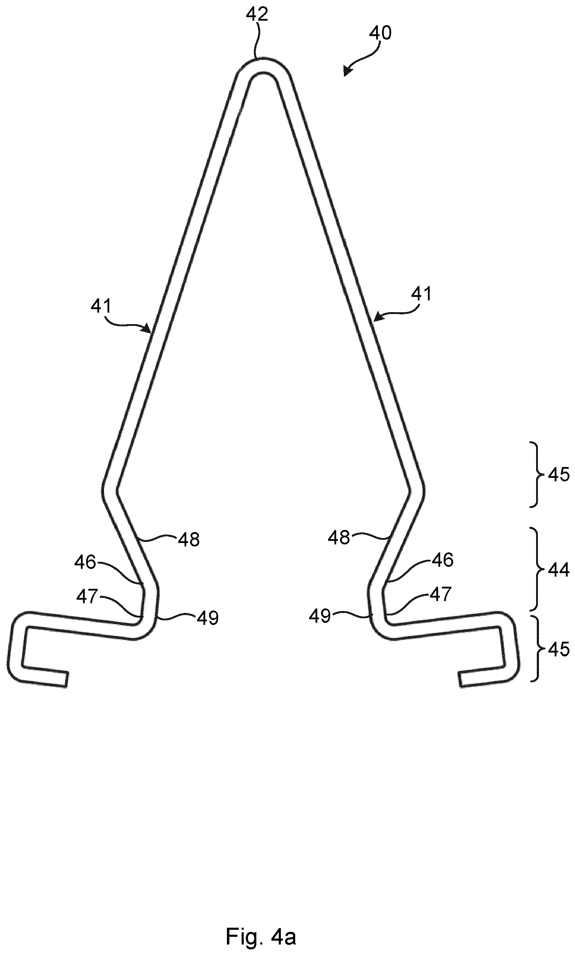

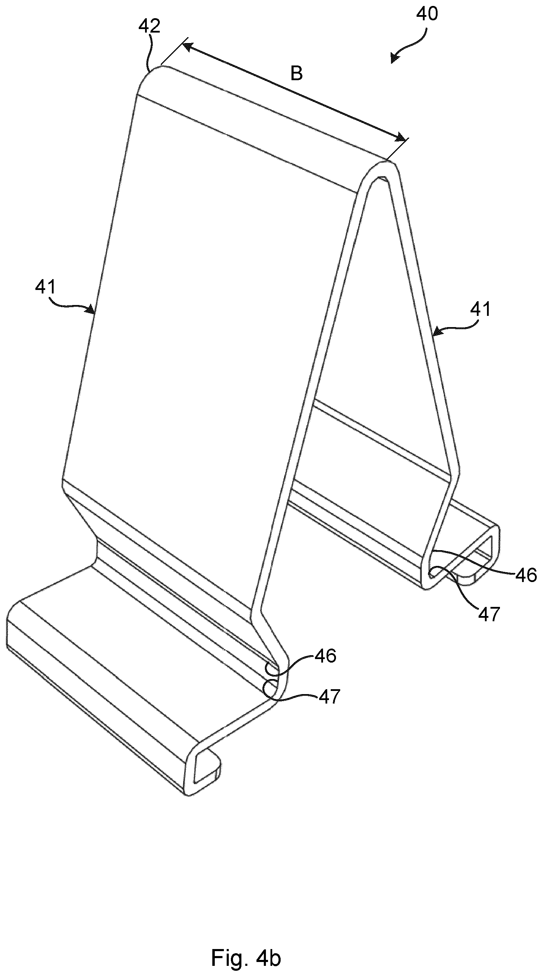

The system also comprises a plurality of fixations clips 40 arranged to be received in the first 14 and second 34, 134 fixation holes for fixation of the cladding panels 20 to the base profiles 10. Each clip 40 is comprised of a profile element having a constant cross section. The profile element may be formed by extrusion of a resilient material such as a polymer material. Alternatively, and as in the shown example, each fixation clip may be formed by bending a band of a resilient material, such as a band of spring steel into the cross-sectional shape shown in figs. 4a and 4b.

The cross section of the clip is symmetrical with respect to a central plane. The cross section comprises two legs 41 which are joined at an apex 42. The legs 41 generally diverges in the direction away from the apex 42 and from in order from the apex 42; a first widened portion 43, a waist portion 44 and a second widened portion 44. The second widened portion 44 is thus arranged distal of the waist portion 43, which is arranged distal of the first widened portion 43, with respect to the apex 42. He waist portion 44 comprises a first engagement portion 46 and a second engagement portion 47 which is arranged distal of the first engagement portion 46 with respect to the apex 42. The legs 41 each comprises a first section 48 which converges from the widened portion 43 and which comprises the first engagement portion 46. A second section 49of each leg 41 extends mutually in parallel from the first section to the second widened portion 45 and comprises the second engagement portion 47.

When mounting the system, the base profiles 10 are first fixed to the ceiling (not shown) such that they extend mutually in parallel in the first direction and are separated by a separation distance which typically may be in the order of 600-700 mm. When necessary, several base profiles may be arranged one after the other in the first direction and joined by means of an extension joint element (not shown).

A fixation clip 40 is fixed to each fixation element 30, 130 by inserting the apex 42 from below (as shown in the figures) into the second fixation hole 34 and pushing the fixation clip 30 130 further in to the second fixation hole such that the widened portion 43, under resilient deformation of the legs 41 are passed through the second fixation holes 34. The converging first sections 48 of the legs 41 then, in contact with the longitudinal edges of the second fixation hole 34, urge the fixation clip 40 further upwards until the second engagement portion 47 comes in contact with the longitudinal edges of the second fixation hole 34. By this means a fixation clip 40 is snap-fitted into engagement with the second fixation hole of each fixation element 30, 130. When so snap-fitted, the second widened portion 45 prevents the fixation clip to be upwardly removed from the fixation element 30, 130. The first widened portion 43 prevents unintentional downward removal of the fixation clip 30, 130. However, the fixation clip 30, 130 may be intentionally removed by compressing the first widened portion 43, 143 and forcing the fixation clip 30, 130 downwards out of engagement from the fixation element.

After having snap-fitted a fixation clip 40 to each fixation element 30, 130, the fixation elements are attached to respective cladding panels 20. The fixation elements 30, 130 are attached to the cladding panels by inserting the flanges 32, 132 into the grooves 25 and pushing the fixation elements 30, 130 fully into the recess 23 of the cladding panels 20. The teeth 33, 133 the engages the core 22 of the cladding elements such that the fixation elements are not unintentionally separated from the cladding panels 20. An end fixation element 30 is attached to each end of the cladding panels 20 such that the second fixation hole 34 and the snap-fitted fixation clip is positioned in proximity to the end of the cladding panel. A suitable number of centre fixation elements 130 are attached to the panels 20 such that the distance between the fixation elements 30, 130 of each cladding panel 20 corresponds to the lateral distance between sideways neighbouring base profiles 10 fixed to the ceiling.

Thereafter, the cladding panels 20 are readily fixed to the base profiles 10 by simply snap-fitting the fixation clips 30, 130 of each panel into engagement with a corresponding first fixation hole 14 of the base profiles 10. The apex 42 of each fixation clip is inserted into a respective first fixation hole 14 and the clip is then pushed further into the first fixation hole 14 under deformation of the two legs 41 until the widened portion 43 has passed through the first fixation hole 14. The converging section 48 of each leg 41 then, in contact with opposing edges of the first fixation hole 14, urges the clip 40 further until the upper surface of the cladding panel 20 or the fixation element 30, 130 makes contact with the lower surface of the base profile's 10 base plate 11. The first engagement portion 46 at the waist portion 44 of the fixation clip 40 is then engaged with the opposing edges of the first fixation hole 14.

Alternatively the cladding panels 20 may be fixed to the base profiles by first inserting the fixation clips 40 into the fixation elements 30, 130 and thereafter inserting the fixation clips 40 into the first fixation holes 14 of the base profiles. When the fixation elements 30, 130 in this way have been fixed to the base profiles 10, the cladding panels are attached to the fixation elements 30, 130 by inserting the flanges 32, 132 and the central portion 31, 131 of each fixation element 30, 130 into the grooves 25 and recess 24 of the cladding panels 20.

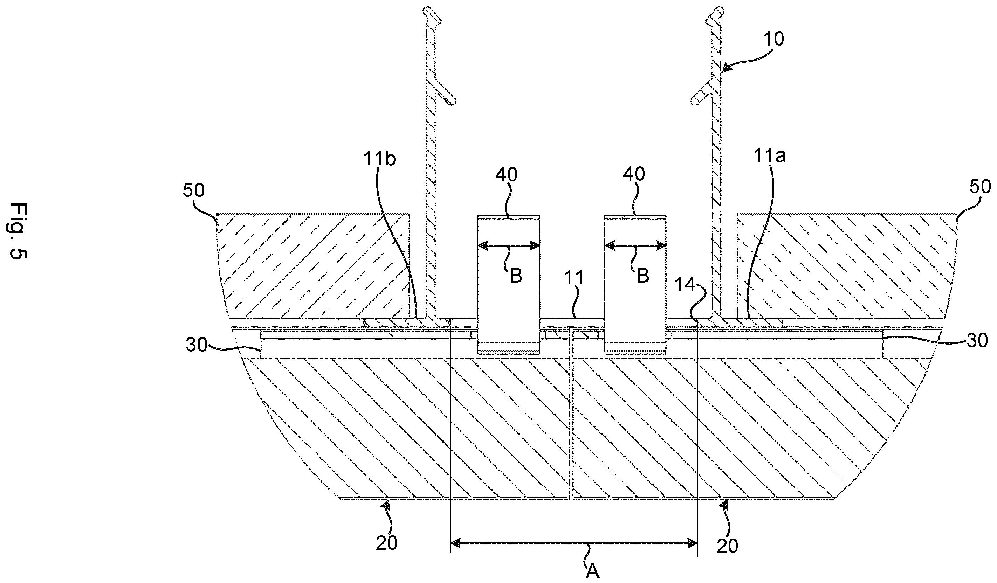

Fig. 5 illustrates how two cladding panels 20 have been fixed, aligned one after the other in the second direction Y, to a single base profile 10. The base profile is fixed directly to or suspended from a ceiling which is not shown in fig. 5. A fixation element 30 with a snap-fitted fixation clip 40 has been attached to the respective adjacent ends of the two cladding panels 20 as described above. The cladding panels 20 have further been fixed to the base profile 10 by snap-fitting the two fixation clips 40 into a single first fixation hole 14 through the base plate 11 of the base profile 10. In addition, two sound insulating elements 50 have been arranged above the cladding panels 20 by being supported by respective side flanges 11a, 11b of the base profile. As readily understood, the sound insulating elements 50 are also supported by the side flanges of adjacent (not shown) further base profiles arranged at a distance from and in parallel with the base profile 10 shown in fig 5.

After fixation, the cladding panels may easily be removed from the base profiles 10 by pulling the cladding panels 20 away from the base profiles 10. Such pulling will cause the legs 41 of the fixation clips 40 to resiliently deform such that the widened portions may be forced downwardly through the first fixation holes 14 to thereby release the fixation clips 40 and the cladding panels 20 from the base profiles 10.

An important aspect is that the length A (see fig. 1) of the first fixation holes 14 in the second direction Y, i.e. in the transverse direction of the base profile 10 is greater than the longitudinal extension B (see fig. 4b) of the fixation clip's mounting portion 46, in the second direction when mounted. At the shown example, the fixation clip has a constant length B, such that the length B indicated in fig. 4b is equal to the corresponding length of the engagement portion 46. At other embodiments of fixation clip with varying length in the second direction Y, it is the length of the mounting portion 46 which is decisive for dimensioning the length A of the first fixation hole.

This length ratio, A:B > 1, greatly facilitates the insertion and snap-fitting of the fixation clips into the first fixation holes 14. Since the fixation clips 40 and the first fixation holes 14 are concealed by the cladding panels 20 and not visible during fixation this length ratio A:B being greater than 1 greatly facilitates finding the first fixation hole 14 and inserting the clip 40. Said length ratio also allows for that the accuracy of the lateral distance between fixation profiles 10 in the second direction Y as well as the longitudinal positioning in the second direction Y may be reduced. This reduction of required accuracy greatly facilitates and speeds up the entire mounting procedure.

A further important advantage of having a length ration A:B > 1 is that the longitudinal position in the second direction Y of the cladding panels 20 may easily be adjusted after fixation. The longitudinal play by which the fixation clips 40 are then received in the first fixation holes allows for that the clips 40 and the cladding panels 10, to which they are fixed, are displaced or slid in the second direction Y relative to the base profile 10. By this means the position of the cladding panels 20 may easily be adjusted in the second direction Y also after fixation of the cladding panels 20.

It has shown that the length ratio A:B may preferably be chosen between 1,5 and 6,0 for achieving said advantages of easy and quick mounting as well as adjustability after fixation.

A special advantage is achieved if said length ratio A:B is equal to two or greater. At such instances the first fixation holes 14 may receive two fixation clips 40 arranged one after the other in the second direction Y. By this means one end of a first cladding panel 20 may be fixed to and supported by the same base profile 10 as an adjacent end of a second cladding pan2l 20, which is arranged in the longitudinal extension of the first cladding panel 20. For avoiding that the ends of the cladding panels 20 are bent by gravity or by other means misaligned it is important that the ends of the panels are fixed to and supported by a base profile. By allowing two fixation clips 40 to be fixed, one after the other in the second direction Y, by a single base profile 10 full support of the ends is achieved without the use of any additional panel joining elements and without the need of arranging two base profiles supporting a respective panel end sideways in close proximity. At previous known systems, such longitudinal cladding panel joining elements and/or the arrangement of two sideways closely positioned base profiles where needed at each longitudinal joint between two adjacent cladding panels. Hence, by selecting the ratio A:B equal to or grater than 2 reduces the number of required components for setting up the cladding.

For allowing the fixation of two fixation clips 40 in a single first fixation hole 14 and the longitudinal adjustability it has shown that the ratio A:B should preferably be chosen between 2,5 and 6,0.

At an alternative, not shown embodiment, the base profile comprises a series of first fixation holes arranged in pairs. Each pair then comprises two first fixations holes aligned one after the other in the second direction Y and the pairs are arranged side-by-side, one after the other, in the first direction X. At such embodiments the length A of each first fixation hole in each pair should be greater than the length B of the fixation clip. By this follows that the accumulated length in the second direction Y of the two first fixation holes in each pair should be greater than two times the fixation clip's extension B in the second direction. Hence, this embodiment also provides the advantages of easy mounting, adjustability after fixation and that the ends of two longitudinally adjacent cladding panels are fixed to and supported by a single base profile.

For achieving a secure but still easy snap-fitting of the fixation clips 40 in the first fixation holes 14, the cross-sectional dimensions of the fixation clip 40 should be chosen with respect to the width (in the first direction X) of the first fixation holes. When the fixation clip 40 is made of spring steel as shown in the figures, it has proven suitable to dimension the cross-sectional width of the widened portion 43, in the relaxed state of the fixation clip 40, to be approx. 1,5 - 5,0 ( times the corresponding width of the first fixation hole 14. The narrowest width of the waist portion 44 should the, in the relaxed state of the fixation clip 40, be approx. 1,3 - 3,0 (??) times said width of the first fixation hole 14.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims. For example, the materials from which the base profile, the cladding panels, the fixation elements and the fixation clips are formed may vary depending on the application circumstances. Suitable materials for forming the base profile are e.g. aluminium, steel, polymers, and composite materials. The cladding panels may be formed of or comprise e.g. gypsum, such as fibre reinforced gypsum, hard wood, plywood, Oriented Strand Board (OSB), chipboard, Medium Density Fiberboard (MDF), aluminium, concrete, ceramics, stoneware, terracotta, polymer materials or composite materials comprising such and/or other materials.. The fixation elements may be formed of or comprises aluminium, such as extruded aluminium, steel, polymer materials or composite materials. The fixation clips may be formed of bent bands of spring steel, injection moulded or extruded polymer materials, aluminium or composite materials.

In the examples shown and described above, the fixation clips are made separate from and fixable to the fixation elements by means of the second fixation hole in the fixation element. However, according to non-shown embodiments, the fixation clip may be formed integral with the fixation element or fixable thereto by other means than being received in a second fixation hole in the fixation element.

Further, at the embodiments shown and described above, the cladding panels are arranged in a horizontal plane below a not shown ceiling such that the system forms a ceiling cladding system. The system may however be used also for wall claddings. At such embodiments the base profiles are fixed to the wall to be cladded. The base profiles may be arranged vertically such that the first direction is vertical whereby the cladding panels will extend in the second horizontal direction. Alternatively, the base profiles may be arranged in a horizontal first direction, whereby the cladding panels will extend in the second direction being vertical. Further, the cladding panels need not be arranged perpendicular to the base profiles as in the examples shown and described above. Instead, when mounted, the cladding panels may be arranged at any angle other than zero in relation to the cladding panels. In practice, the angle between the cladding panels and the base profiles may typically be between 45 and 90°. At such non-perpendicular embodiments, the elongate first fixation holes in the base profiles should be arranged such that they extend in parallel with the longitudinal direction of the cladding panels when mounted. I.e. the first fixation holes should extend relative to the base profiles at the same angle as the cladding profiles extend relative to the base profiles.

## Claims

1. A system for fixation of elongate cladding panels (20) to a ceiling, a wall or the like, which system comprises;
- at least one elongate base profile (10) arranged to extend in a first direction (X) and being provided with a plurality of first fixation holes (14) arranged one after the other in the first direction (X),
- at least one elongate cladding panel (20) arranged to extend in a second direction (Y) which is non-parallel, preferably essentially perpendicular, to the first direction (X),
- a number of fixation elements (30, 130), each of which is arranged to be attached to a cladding panel (20), and
- at least one fixation clip (40) which is fixable to or made integral with one of the fixation elements (30, 130) and arranged to be received in a first fixation hole (14) for fixation of the cladding panel (20) to the base profile (10),
wherein the fixation clip (40) exhibits a first engagement portion (46) arranged to be received in the first fixation hole (14) **characterized in that** the extension (A) in the second direction (Y) of the first fixation hole (14) is greater than two times the extension (B) in the second direction (Y) of the first engagement portion (46).

2. A system according to claim 1, wherein the fixation clip (40) is resilient and the first engagement portion (46) is arranged to be releasably received in the first engagement hole (14) by snap-fitting.

3. A system according to any of claims 1-2, wherein each fixation element (30, 130) is provided with a second fixation hole (34, 134) and the fixation clip (40) is arranged to be received in the second fixation hole (34, 134) for fixation of the fixation clip (40) to the fixation element (30, 130).

4. A system according to claim 2 or 3, wherein the fixation clip (40) comprises a second engagement portion (47) which is arranged to be e received in the second engagement hole (34, 134) by snap-fitting.

5. A system according to any of claim 1-4, wherein the fixation clip (40) comprises a resilient profile element having a constant cross section.

6. A system according to claim 5, wherein the cross section of the fixation clip (40) comprises two legs (41) which are joined at an apex (42).

7. A system according to claim 6, wherein the two legs (41) form a first widened portion (43) and a waist portion (44) of the cross section, which waist portion (44) is arranged distal of the first widened portion (43) with respect to the apex (42) and wherein the first engagement portion (46) is arranged at the waist portion (44).

8. A system according to claim 7, wherein the second engagement portion (47) is arranged at the waist portion (44) of the cross section of the fixation clip (40), distal of the first engagement portion (46) with respect to the apex (42).

9. A system according to claim 8, wherein the cross section comprises a second widened portion (45) which is arranged distal to the second engagement portion (47) with respect to the apex (42).

10. A system according to any of claims 1-9, wherein the number of fixation elements (30, 1130) comprise at least one elongate end fixation element (30) extending in the second direction (Y) when mounted and exhibiting a second fixation hole (134) arranged in proximity to a longitudinal end of the end fixation element (30).

11. A system according to any of claims 1-10, wherein the number of fixation elements (30, 130) comprise at least one elongate centre fixation element (130) extending in the second direction (Y) when mounted and exhibiting a second fixation hole (134) arranged at longitudinal mid portion of the centre fixation element (134).

12. A system according to any of claims 1-11, wherein the cladding panel (20) exhibits at least one longitudinal groove (25) arranged to fixedly receive a protruding flange (32, 132) of a fixation element (30, 130).

13. A system according to claim 12, wherein the fixation element (30, 130) comprises a fixation profile element, the cross section of which exhibits a central portion (31, 131) provided with a second fixation hole (34, 134) and a protruding flange (32, 132) at each lateral side of the central portion (31, 131) and wherein the cladding panel (20) exhibits a cross section comprising a longitudinally extending recess (24) arranged to receive the central portion (31, 131) and two longitudinal groves (25) each of which is arranged to receive one of the flanges (32, 132).

14. A system according to any of claims 1-13 wherein the base profile comprises at leas one pair of first fixation holes aligned one after the other in the second direction (Y) and wherein the length of each first fixation hole in the second direction (Y) is greater than two times the length in the second direction of the mounting portion of the fixation clip.

## Patentansprüche

1. System zur Befestigung von langgestreckten Verkleidungspaneelen (20) an einer Decke, einer Wand oder dergleichen, wobei das System Folgendes aufweist:
- mindestens ein langgestrecktes Grundprofil (10), das derart angeordnet ist, sich in eine erste Richtung (X) zu erstrecken, und mit einer Vielzahl an ersten Befestigungslöchern (14) versehen ist, die nacheinander in der ersten Richtung (X) angeordnet sind,
- mindestens ein langgestrecktes Verkleidungspaneel (20), das derart angeordnet ist, sich in eine zweite Richtung (Y), die nicht parallel, bevorzugt im Wesentlichen senkrecht zur ersten Richtung (X) ist, zu erstrecken,
- eine Anzahl an Befestigungselementen (30, 130), wobei jedes derart ausgelegt ist, an einem Verkleidungspaneel (20) angebracht zu werden, und
- mindestens eine Befestigungsklammer (40), die an einem der Befestigungselemente (30, 130) befestigt werden kann oder damit einstückig gebildet ist und derart angeordnet ist, in einem ersten Befestigungsloch (14) zur Befestigung des Verkleidungspaneels (20) an dem Basisprofil (10) aufgenommen zu werden,
wobei die Befestigungsklammer (40) einen ersten Eingriffsabschnitt (46) aufweist, der derart angeordnet ist, in dem ersten Befestigungsloch (14) aufgenommen zu werden, **dadurch gekennzeichnet, dass** die Erstreckung (A) in die zweiten Richtung (Y) des ersten Befestigungslochs (14) größer als die doppelte Erstreckung (B) in die zweite Richtung (Y) des ersten Eingriffsabschnitts (46) ist.

2. System nach Anspruch 1, wobei die Befestigungsklammer (40) nachgiebig ist und der erste Eingriffsabschnitt (46) derart angeordnet ist, durch Einrasten entfernbar in dem ersten Befestigungsloch (14) aufgenommen zu werden.

3. System nach einem der Ansprüche 1 bis 2, wobei jedes Befestigungselement (30, 130) mit einem zweiten Befestigungsloch (34, 134) versehen ist und die Befestigungsklammer (40) derart angeordnet ist, in dem zweiten Befestigungsloch (34, 134) zur Befestigung der Befestigungsklammer (40) an dem Befestigungselement (30, 130) aufgenommen zu werden.

4. System nach Anspruch 2 oder 3, wobei die Befestigungsklammer (40) einen zweiten Eingriffsabschnitt (47) aufweist, der derart angeordnet ist, durch Einrasten in dem zweiten Eingriffsloch (34, 134) aufgenommen zu werden.

5. System nach einem der Ansprüche 1 bis 4, wobei die Befestigungsklammer (40) ein nachgiebiges Profilelement aufweist, das einen gleichbleibenden Querschnitt aufweist.

6. System nach Anspruch 5, wobei der Querschnitt der Befestigungsklammer (40) zwei Schenkel (41) aufweist, die an einer Spitze (42) miteinander verbunden sind.

7. System nach Anspruch 6, wobei die zwei Schenkel (41) einen ersten erweiterten Abschnitt (43) und einen Taillenabschnitt (44) des Querschnitts bilden, wobei der Taillenabschnitt (44) distal von dem ersten erweiterten Abschnitt (43) bezüglich der Spitze (42) angeordnet ist, und wobei der erste Eingriffsabschnitt (46) an dem Taillenabschnitt (44) angeordnet ist.

8. System nach Anspruch 7, wobei der zweite Eingriffsabschnitt (47) an dem Taillenabschnitt (44) des Querschnitts der Befestigungsklammer (40) distal von dem ersten Eingriffsabschnitt (46) bezüglich der Spitze (42) angeordnet ist.

9. System nach Anspruch 8, wobei der Querschnitt einen zweiten erweiterten Abschnitt (45) aufweist, der distal von dem zweiten Eingriffsabschnitt (47) bezüglich der Spitze (42) angeordnet ist.

10. System nach einem der Ansprüche 1 bis 9, wobei die Anzahl an Befestigungselementen (30, 1130) mindestens ein langgestrecktes Endbefestigungselement (30) aufweist, das sich, wenn installiert, in die zweite Richtung (Y) erstreckt und ein zweites Befestigungsloch (134), das nahe einem längsverlaufenden Ende des Endbefestigungselements (30) angeordnet ist, aufweist.

11. System nach einem der Ansprüche 1 bis 10, wobei die Anzahl an Befestigungselementen (30, 130) mindestens ein langgestrecktes Mittenbefestigungselement (130) aufweist, das sich, wenn installiert, in die zweite Richtung (Y) erstreckt und ein zweites Befestigungsloch (134), das nahe einem längsverlaufenden Mittenabschnitt des Mittenbefestigungselements (134) angeordnet ist, aufweist.

12. System nach einem der Ansprüche 1 bis 11, wobei das Verkleidungspaneel (20) mindestens eine Längsnut (25) aufweist, die derart angeordnet ist, einen vorstehenden Flansch (32, 132) eines Befestigungselements (30, 130) fest aufzunehmen.

13. System nach Anspruch 12, wobei das Befestigungselement (30, 130) ein Befestigungsprofilelement aufweist, dessen Querschnitt einen Mittenabschnitt (31, 131) aufweist, der mit einem zweiten Befestigungsloch (34, 134) und einem vorstehenden Flansch (32, 132) an jeder lateralen Seite des Mittenabschnitts (31, 131) versehen ist, und wobei das Verkleidungspaneel (20) einen Querschnitt aufweist, der eine sich länglich erstreckende Vertiefung (24), die derart angeordnet ist, den Mittenabschnitt (31, 131) aufzunehmen, und zwei Längsnuten (25), die jeweils derart angeordnet sind, einen der Flansche (32, 132) aufzunehmen, aufweist.

14. System nach einem der Ansprüche 1 bis 13, wobei das Basisprofil mindestens ein Paar erster Befestigungslöcher aufweist, die nacheinander in der zweiten Richtung (Y) ausgerichtet sind, und wobei die Länge jedes ersten Befestigungslochs in der zweiten Richtung (Y) größer als die doppelte Länge in der zweite Richtung des Befestigungsabschnitts der Befestigungsklammer ist.

## Revendications

1. Système de fixation de panneaux de revêtement allongés (20) à un plafond, un mur ou analogue, lequel système comprend :
- au moins un profilé de base allongé (10) disposé de manière à s'étendre dans une première direction (X) et pourvu d'une pluralité de premiers trous de fixation (14) disposés les uns à la suite des autres dans la première direction (X),
- au moins un panneau de revêtement allongé (20) disposé de manière à s'étendre dans une seconde direction (Y) non parallèle, de préférence essentiellement perpendiculaire, à la première direction (X),
- un certain nombre d'éléments de fixation (30, 130), chacun étant agencé pour être fixé à un panneau de revêtement (20), et
- au moins une agrafe de fixation (40) qui peut être fixée à l'un des éléments de fixation (30, 130) ou rendue solidaire de celui-ci et qui est agencée pour être reçue dans un premier trou de fixation (14) pour la fixation du panneau de revêtement (20) au profilé de base (10),
l'agrafe de fixation (40) présentant une première partie d'engagement (46) agencée pour être reçue dans le premier trou de fixation (14), **caractérisé en ce que** l'extension (A) dans la seconde direction (Y) du premier trou de fixation (14) est supérieure à deux fois l'extension (B) dans la seconde direction (Y) de la première partie d'engagement (46).

2. Système selon la revendication 1, dans lequel l'agrafe de fixation (40) est élastique et la première partie d'engagement (46) est agencée pour être reçue de manière amovible dans le premier trou d'engagement (14) par encliquetage.

3. Système selon l'une quelconque des revendications 1 et 2, dans lequel chaque élément de fixation (30, 130) est muni d'un second trou de fixation (34, 134) et l'agrafe de fixation (40) est agencée pour être reçue dans le second trou de fixation (34, 134) pour fixer l'agrafe de fixation (40) à l'élément de fixation (30, 130).

4. Système selon la revendication 2 ou 3, dans lequel l'agrafe de fixation (40) comprend une seconde partie d'engagement (47) qui est agencée pour être reçue dans le second trou d'engagement (34, 134) par encliquetage.

5. Système selon l'une quelconque des revendications 1 à 4, dans lequel l'agrafe de fixation (40) comprend un élément profilé élastique ayant une section transversale constante.

6. Système selon la revendication 5, dans lequel la section transversale de l'agrafe de fixation (40) comprend deux branches (41) sont jointes au niveau d'un sommet.

7. Système selon la revendication 6, dans lequel les deux branches (41) forment une première partie élargie (43) et une partie taille (44) de la section transversale, laquelle partie taille (44) est agencée de manière distale par rapport à la première partie élargie (43) par rapport au sommet (42) et la première partie d'engagement (46) est agencée au niveau de la partie taille (44).

8. Système selon la revendication 7, dans lequel la seconde partie d'engagement (47) est agencée au niveau de la partie taille (44) de la section transversale de l'agrafe de fixation (40), distale par rapport à la première partie d'engagement (46) par rapport au sommet (42).

9. Système selon la revendication 8, dans lequel la section transversale comprend une seconde partie élargie (45) qui est agencée de manière distale par rapport à la seconde partie d'engagement (47) par rapport au sommet (42).

10. Système selon l'une quelconque des revendications 1 à 9, dans lequel le nombre d'éléments de fixation (30, 1130) comprend au moins un élément de fixation d'extrémité allongé (30) s'étendant dans la seconde direction (Y) lorsqu'il est monté et présentant un second trou de fixation (134) agencé à proximité d'une extrémité longitudinale de l'élément de fixation d'extrémité (30).

11. Système selon l'une quelconque des revendications 1 à 10, dans lequel le nombre d'éléments de fixation (30, 130) comprend au moins un élément de fixation central allongé (130) s'étendant dans la seconde direction (Y) lorsqu'il est monté et présentant un second trou de fixation (134) agencé au niveau de la partie médiane longitudinale de l'élément de fixation central (134).

12. Système selon l'une quelconque des revendications 1 à 11, dans lequel le panneau de revêtement (20) présente au moins une rainure longitudinale (25) agencée pour recevoir de manière fixe une bride saillante (32, 132) d'un élément de fixation (30, 130).

13. Système selon la revendication 12, dans lequel l'élément de fixation (30, 130) comprend un élément profilé de fixation, la section transversale de ce panneau présente une partie centrale (31, 131) pourvue d'un second trou de fixation (34, 134) et une bride saillante (32, 132) sur chaque côté latéral de la partie centrale (31, 131) et le panneau de revêtement (20) présente une section transversale comprenant un évidement s'étendant longitudinalement (24) agencé pour recevoir la partie centrale (31, 131) et deux rainures longitudinales (25) dont chacune est agencée pour recevoir une des brides (32, 132).

14. Système selon l'une quelconque des revendications 1 à 13, dans lequel le profilé de base comprend au moins une paire de premiers trous de fixation alignés l'un après l'autre dans la seconde direction (Y) et la longueur de chaque premier trou de fixation dans la seconde direction (Y) est supérieure à deux fois la longueur dans la seconde direction de la partie de montage de l'agrafe de fixation.
